# EUROPÄISCHE PATENTANMELDUNG

(11) **EP 1 223 068 A1**
(43) Veröffentlichungstag der Anmeldung: **17.07.2002**
(21) Anmeldenummer: 01130369.0
(22) Anmeldetag: 20.12.2001
(51) Int. Cl.: B60K 7/00, H02K 17/02, B60L 9/16

(54) **Antriebsrad eines Elektrofahrzeugs**

(30) Priorität: 11.01.2001 DE 10100861
(71) Anmelder: Bieschewski, Lothar, 41366 Schwalmtal (DE)
(72) Erfinder: Bieschewski, Lothar, 41366 Schwalmtal (DE)
(74) Vertreter: von Creytz, Dietrich, Dipl.-Phys.

(57) **Zusammenfassung**

Es wird das Antriebsrad eines Elektrofahrzeugs beschrieben. Um die Reibung zum Übertragen der elektrischen Energie auf das Rad zu vermindern und zugleich einen drehmomentstarken Antrieb zu schaffen, wird das Rad als Drehstromasynchronmotor mit in Bezug auf den Ständer (11) radial außen liegendem Kurzschlußläufer (12) ausgebildet, wobei der Ständer mit der Radachse (5) und der Läufer mit der Felge (3) verbunden ist.

## Beschreibung

Die Erfindung betrifft ein Antriebsrad eines Elektrofahrzeugs, welches Rad auf einer am Fahrzeug befestigten Radachse gelagert ist und eine Felge mit Reifen oder dergleichen zum Abrollen auf dem Boden, z.B. auf der Straße, besitzt.

Elektrofahrzeuge werden in der Regel durch einen Elektromotor angetrieben, der mit den Antriebsrädern über diverse Getriebe gekoppelt ist. Die Getriebe verursachen erhebliche Reibungsverluste. Das Rad selbst wird über eine an seiner Drehachse, im Wesentlichen im Drehmittelpunkt, angreifende Welle angetrieben. Solche Antriebe sind naturgemäß drehmomentschwach. Selbst wenn man die Abtriebswelle des jeweiligen Elektromotors unmittelbar als Antriebswelle des Fahrzeugrades verwendet, ergibt sich ein drehmomentschwacher Motor. Eine Verbesserung betreffend das Drehmoment könnte erzielt werden, wenn der Motor, z.B. über ein Zahnrad, unmittelbar an der Motorfelge oder dergleichen mechanisch angreift. Dann ergeben sich jedoch wieder mit der mechanischen Übertragung verbundene Reibungsverluste.

Mechanische Drehmoment- und Reibungsverluste werden bei Verwendung von Otto- oder Dieselmotoren in Kauf genommen, weil hierbei an sich genügend Kraftreserven zur Verfügung zu stellen sind. Etwas anderes gilt dann, wenn für den Antrieb nur gespeicherte elektrische Energie oder durch Direktumwandlung erzeugte elektrische Energie, z.B. aus Brennstoffzellen, eingesetzt werden sollen. In diesen Fällen ist der Aufwand zum Erzeugen bzw. Bereitstellen der elektrischen Energie unverhältnismäßig hoch, so daß Interesse daran besteht, ein gegenüber dem Fall beim Otto- oder Dieselmotor neues Konzept für die Ankoppelung des Elektromotors an das Antriebsrad zu schaffen.

Der Erfindung liegt die Aufgabe zugrunde, die Übertragung der im Elektromotor des Fahrzeugs erzeugten Energie möglichst ohne Reibungsverluste und zugleich möglichst drehmomentstark in das jeweilige Antriebsrad einzuleiten.

Die erfindungsgemäße Lösung ist für das eingangs genannte Antriebsrad gekennzeichnet durch die Ausbildung des Rades als Drehstromasynchronmotor mit in Bezug auf den Motorständer (Stator) radial außen liegendem Kurzschlußläufer, wobei der Ständer mit der Radachse und der Läufer mit der Felge verbunden ist. Vorzugsweise können der Läufer als Felge und/oder der Ständer als Radachse ausgebildet werden. Der zwischen Ständer und Läufer aufgespannte ringförmige Luftspalt kann erfindungsgemäß einen - bezogen auf die Motorleistung - ungewöhnlich großen Ringdurchmesser erhalten.

Erfindungsgemäß wird also der verwendete Elektromotor in das Rad integriert. Je größer man den radialen Außenumfang des (innen liegenden) Ständers bzw. den Luftspalt-Ringdurchmesser macht, umso drehmomentstärker wird der erfindungsgemäße Antriebsmotor. Getriebe zum Übertragen der Drehenergie auf das Rad werden nicht benötigt. Die herkömmlich entsprechenden Reibungsverluste gibt es also nicht. Da die Radfelge mit dem Läufer verbunden ist bzw. den Läufer bildet, ist es günstig, einen Kurzschlußläufer vorzusehen, der also elektrische Zuleitungen nicht benötigt. Die an die Spannungsquelle des Fahrzeugs anzuschließenden elektrischen Wicklungen werden bei dem beschriebenen Motor auf den mit der Radachse verbundenen Ständer beschränkt.

Das erfindungsgemäße Antriebsrad soll vorzugsweise in einem neben dem Antriebsteil vorgesehenen Roll-Lager aufgenommen werden. Während es günstig ist, den Ringdurchmesser des Luftspalts des Antriebsteils möglichst groß zu machen, ist es, z.B. aus Kostengründen, oft günstig, den Durchmesser des Roll-Lagers möglichst klein zu halten. Es ist ein Vorteil der Erfindung, daß sie es ermöglicht, die vorstehenden Bedingungen zugleich zu erfüllen. Im Prinzip braucht lediglich der das Rad tragende Radkörper von der Felge aus radial bis zur Radachse zu reichen, während der Ständer auf einem scheibenförmigen Tragkörper auf der Radachse (unverdrehbar) fixiert wird, so daß er bzw. der Luftspalt zwischen Ständer und Läufer in möglichst großem radialem Abstand zur Radachse liegt. Der Radkörper bzw. Tragkörper kann in einer bei herkömmlichen Kraftfahrzeugen üblichen Weise, z.B. massiv, mit Durchbrechungen oder mit Speichen, ausgelegt werden.

Bei Anwendung bei einem Kraftwagen können ein, zwei oder mehr, insbesondere alle Räder, erfindungsgemäß ausgebildet werden. Die Erfindung bietet sich besonders vorteilhaft bei einem so genannten Allradfahrzeug an. Hierbei muß zwar jedes Antriebsrad erfindungsgemäß - also mit eigenem Antrieb - ausgestattet werden. Da aber besondere Getriebe entfallen und die Kraft des Motors mit großem Abstand von der Radachse an die Felge oder dergleichen angreift, ergibt sich ein - bezogen auf die eingesetzte elektrische Energie - bisher nicht erreichter Wirkungsgrad. Die Erfindung bietet sich daher speziell für den Fall an, daß die elektrische Energie im Fahrzeug durch Brennstoffzellen erzeugt werden soll.

Für das Drehmoment kommt erfindungsgemäß als günstig hinzu, daß das relativ schwere Eisen des Läufers weitab vom Drehmittelpunkt liegt. Je hochpoliger Läufer und Ständer sind, umso besser wird also der Wirkungsgrad. Drehende Antriebsteile innerhalb des Kraftfahrzeugs bzw. außerhalb der Räder gibt es nicht mehr. Dadurch entfallen nicht nur entsprechende Reibungsverluste, vielmehr wird das Fahrzeuggewicht auch insgesamt vermindert, so daß schon deshalb weniger Antriebsenergie als herkömmlich erforderlich ist.

Anhand der schematischen Zeichnung eines Ausführungsbeispiels werden Einzelheiten der Erfindung erläutert. Es zeigen:
- **Fig. 1**: einen Schnitt senkrecht zur Achse eines erfindungsgemäßen Rades;
und
- **Fig. 2**: einen Schnitt parallel zur Achse durch ein erfindungsgemäßes Rad.

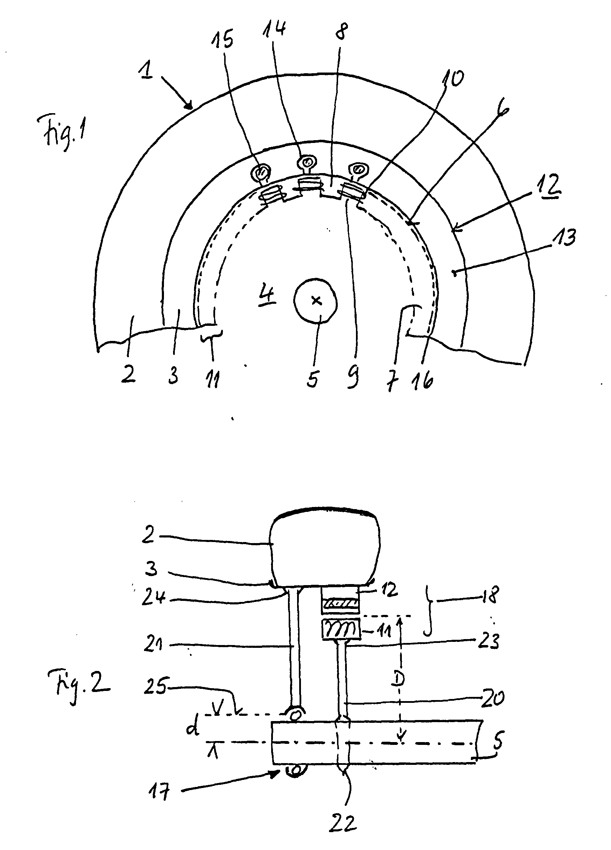

Das insgesamt mit 1 bezeichnete Rad nach Fig. 1 und 2 besteht aus Reifen 2, Felge 3, Radkörper 4 und Achse bzw. Welle 5. Radkappe 4 und Welle 5 werden unverdrehbar miteinander verbunden. Die Welle 5 kann unverdrehbar an dem Chassis des Fahrzeugs befestigt werden.

Erfindungsgemäß kann der Radkörper 4 an seinem Umfang 6 mit Ständerblechpaketen 7 und darin - dem Umfang 6 zugewandt - vorgesehenen Ständernuten 8 und Ständerpolen 9 ausgestattet werden. Auf die Ständerpole 9 werden die Ständerwicklungen aufgebracht. Die Ständerwicklungen werden über (nicht gezeichnet) Zuleitungen mit einer im Fahrzeug vorgesehenen Spannungsquelle verbunden. Der Ständer 11 kann Teil des Radkörpers 4 sein.

Radial (in Bezug auf die Welle 5) außen um den Radkörper 4 erstreckt sich der Läufer 12 des Motors, der mit der Felge 3 verbunden sein soll bzw. einen Teil der Felge 3 bilden kann. Es handelt sich um einen Kurzschlußläufer bzw. Käfigläufer bestehend aus Läuferblechen 13 mit darin vorgesehenen Läufernuten 14, in welche Leiterstäbe 15, vorzugsweise Kupferstäbe, eingesetzt werden. Zwischen Läufer 12 und Ständer 11 wird am Umfang 6 des letzteren ein Luftspalt 16 vorgesehen.

In dem in Fig. 2 dargestellten Schnitt eines erfindungsgemäßen Rades wird dargestellt, wie das Rad bevorzugt im Grundsatz elektrisch angetrieben und zugleich mechanisch gelagert werden kann. Das Rad nach Fig. 2 besitzt ein Roll-Lager 17 neben seinem Antriebsteil 18. Für diese prinzipielle Trennung kann der Radkörper 4 von Fig. 1 ersetzt gedacht werden durch einen Antriebstragkörper 20 und einen Lagertragkörper 21. Der Antriebstragkörper 20 wird an einer Verbindungsstelle 22 unverdrehbar fixiert auf der Radachse 5. Er trägt an seinem radialen Außenumfang 23 den Ständer 11. Der Läufer 12 wird am drehenden Radteil bzw. an der Felge 3 fixiert. Die mechanische Anordnung wird bevorzugt so getroffen, daß der Ringdurchmesser D des Luftspalts 16 - bezogen auf den Durchmesser der Felge 3 - möglichst groß ist.

Der Lagerträger 21 wird an einer Verbindungsstelle 24 unverdrehbar fixiert an der Felge 3 bzw. am drehenden Radteil. Er reicht an seinem der Radachse 5 zugewendeten radialen Innenumfang 25 bis zum Roll-Lager 17. Der Ringdurchmesser d des Roll-Lagers 17 soll im Ausführungsbeispiel möglichst klein sein. Im Rahmen der Erfindung wird es bevorzugt, den Ringdurchmesser D groß gegen den Ringdurchmesser d zu machen. Dadurch ergibt sich ein drehmomentstarker Motor des Antriebsrades und zugleich eine kostengünstige, stabile Radlagerung.

### Bezugszeichenliste:

- 1 =: Antriebsrad
- 2 =: Reifen
- 3 =: Felge
- 4 =: Radkörper
- 5 =: Radachse
- 6 =: Umfang (4)
- 7 =: Ständerblechpaket
- 8 =: Ständernut
- 9 =: Ständerpol
- 10 =: Ständerwicklung
- 11 =: Ständer
- 12 =: Läufer
- 13 =: Läuferblech
- 14 =: Läufernut
- 15 =: Leiterstab
- 16 =: Luftspalt
- 17 =: Roll-Lager
- 18 =: Antriebsteil
- 20 =: Antriebstragkörper
- 21 =: Lagertragkörper
- 22 =: Verbindungsstelle (20)
- 23 =: radialer Außenumfang (20)
- 24 =: Verbindungsstelle (21)
- 25 =: radialer Innenumfang (28)

## Patentansprüche

1. Antriebsrad (1) eines Elektrofahrzeugs, welches Rad auf einer am Fahrzeug befestigten Radachse (5) gelagert ist und eine Felge (3) mit Reifen (2) zum Abrollen auf dem Boden besitzt, **gekennzeichnet durch** die Ausbildung des Rades (1) als Drehstromasynchronmotor mit in Bezug auf den Ständer (11) radial außen liegendem Kurzschlußläufer (12), wobei der Ständer (11) mit der Radachse (5) und der Läufer (12) mit der Felge (3) verbunden ist.

2. Antriebsrad nach Anspruch 1, **dadurch gekennzeichnet, daß** der Läufer (12) angrenzend an die Felge (3), also mit Abstand von der Radachse (5) am drehenden Radteil fixiert ist, daß der Ständer (11) über einen Antriebstragkörper (20) unverdrehbar mit der Radachse (5) verbunden ist und daß die Felge (3) über einen daran unverdrehbar fixierten Lagertragkörper (21) auf der Radachse (5) in einem Roll-Lager (17) gelagert ist.

3. Antriebsrad nach Anspruch 1 oder 2, **dadurch gekennzeichnet, daß** der Durchmesser (D) des Luftspalts zwischen Ständer (11) und Läufer (12) groß gegen den Lagerdurchmesser (d) des Roll-Lagers (17) ist.
